# DEMANDE DE BREVET EUROPEEN

(11) **EP 2 607 189 A1**
(43) Date de publication de la demande: **26.06.2013**
(21) Numéro de dépôt: 12196602.2
(22) Date de dépôt: 11.12.2012
(51) Int. Cl.: B60S 1/48

(54) **Dispositif de raccordement electrique et hydraulique pour un systeme d'approvisionnement et/ou de distribution en lave-glace**

(30) Priorité: 19.12.2011 FR 1161877
(71) Demandeur: Valeo Systèmes d'Essuyage, 78321 Le Mesnil Saint Denis (FR)
(72) Inventeur: Jarasson, Jean-Michel, 78321 LE MESNIL SAINT DENIS (FR)
(74) Mandataire: Callu Danseux, Violaine

(57) **Abrégé**

L'invention concerne un dispositif de raccordement électrique et hydraulique 10 pour système d'approvisionnement et/ou de distribution en liquide à projeter sur une vitre d'un véhicule, comprenant au moins un tube 22 et au moins un premier câble 21, 34 électriquement conducteur, le tube 22 est délimité par une paroi 25 dans laquelle est formés au moins deux conduits 23, 24 de circulation du liquide et dans laquelle est noyé un élément chauffant 26, ladite paroi comprenant au moins un évidement 37 ouvert vers l'extérieur du tube 22 et dans lequel se loge tout ou partie dudit câble 21, 34.

Application aux véhicules automobiles.

## Description

Le secteur technique de la présente invention est celui des systèmes d'approvisionnement et/ou de distribution en liquide lave glace pour véhicule automobile. Un tel système accompagne une installation d'essuyage des vitres du véhicule. Plus particulièrement, l'invention vise un dispositif de transport et de chauffage du liquide, autrement appelé dispositif de raccordement électrique et hydraulique pour un liquide véhiculé entre un réservoir et un système de projection.

Les automobiles sont couramment équipées d'installation d'essuyage et de système de lavage pour assurer un essuyage et un lavage du pare-brise, et ainsi éviter que la vision qu'a le conducteur de son environnement soit perturbée. Ces installations d'essuyage comprennent des bras effectuant un mouvement de va-et-vient angulaire au bout desquels sont installés des balais allongés, porteurs eux-mêmes de lames racleuses réalisées en une matière élastique. Ces lames frottent contre le pare-brise et évacuent l'eau en l'amenant en dehors du champ de vision du conducteur. Le balai est rattaché au bras tournant de l'essuie-glace par un ensemble constitué d'un connecteur mécanique et d'un adaptateur. Le connecteur est une pièce qui est fixée directement sur la structure du balai, l'adaptateur étant une pièce intermédiaire qui permet la fixation du connecteur, et donc du balai, sur le bras de l'essuie-glace. Ces deux pièces sont reliées l'une à l'autre par un axe transversal qui autorise leur rotation relative.

Les systèmes de lavage comprennent un dispositif d'amenée d'un liquide lave-vitre qui est acheminé depuis un réservoir situé dans le véhicule et qui est projeté en direction du pare-brise par des gicleurs situés généralement sur le capot, sur la grille de baie de pare-brise ou sur l'essuie-glace lui-même pour une meilleure distribution du liquide. Dans le cas de buses placées sur les balais, le liquide lave-vitre est acheminé, avant d'être réparti entre elles, par des canalisations qui sont fixées sur le bras de l'essuie-glace et qui sont raccordées à un système de distribution du balai au niveau du connecteur. Le connecteur comporte ainsi des orifices aptes à recevoir, par une liaison étanche, les embouts desdites canalisations.

Lorsque la température du liquide lave-glace est trop basse, par exemple en-dessous de 5°C, on chauffe le liquide lave-glace. Pour cela, une conduite de transport réchauffe le liquide lave-glace prélevé dans le réservoir par une pompe au moment ou l'on actionne la commande du lave-glace, généralement par le levier de commande placé à côté du volant et contrôlant entre autre l'actionnement des essuie-glaces.

Le chauffage du liquide au niveau de la conduite de transport est assuré par un élément chauffant qui chemine au voisinage de la conduite. Il est connu de chauffer le balai d'essuyage de manière à éviter que ce dernier ne soit pris par le gel. Un tel chauffage est mis en oeuvre par un dispositif chauffant monté sur la lame racleuse, dans la longueur du balai d'essuyage. Ce dispositif chauffant est activé électriquement et il est alors nécessaire d'amener des câbles d'alimentation électrique depuis le véhicule vers le balai d'essuyage.

Dans l'art antérieur connu, ces câbles d'alimentation cheminent le long de la conduite de transport de liquide et sont maintenus sur celle-ci par des zones scotchées.

Cette solution conforme à l'art antérieur n'est pas satisfaisante, en particulier pour les véhicules haut de gamme, car elle n'est pas en phase avec le niveau esthétique attendu pour ce genre de véhicule. En effet, un utilisateur de véhicule ne peut pas accepter de voir des câbles cheminer de manière désordonnée le long d'un tube d'alimentation en lave-glace du balai d'essuyage. Une liaison par des bandes adhésives entre les câbles et le tube n'est également pas acceptable, pour les mêmes raisons. Cette dernière solution implique également une complication du procédé d'assemblage qui, outre le coût intrinsèque à ces bandes adhésives, augmente le coût de revient d'un tel procédé.

La solution de l'art antérieur présente un deuxième inconvénient. L'ensemble formé par les câbles et le tube d'alimentation en lave-glace présente un encombrement important qui nuit à son installation. En effet, cet ensemble doit passer dans une gorge de taille normalisée au niveau d'un entraîneur du bras d'essuyage, puis cheminer sous le bras jusqu'à l'essuie-glace. Le volume disponible en ces zones est extrêmement restreint et ne permet pas de loger l'ensemble formé des câbles et du tube d'alimentation.

Le but de la présente invention est donc de résoudre les inconvénients décrits ci-dessus principalement en combinant astucieusement le tube d'alimentation en lave-glace et le ou les câbles électriques qui alimentent le dispositif chauffant présent sur le balai d'essuyage.

L'invention a donc pour objet un dispositif de raccordement électrique et hydraulique pour système d'approvisionnement et/ou de distribution en liquide à projeter sur une vitre d'un véhicule, comprenant au moins un tube et au moins un premier câble électriquement conducteur, le tube est délimité par une paroi dans laquelle est formés au moins deux conduits de circulation du liquide et dans laquelle est noyé un élément chauffant, ladite paroi comprenant au moins un évidement ouvert vers l'extérieur du tube et dans lequel se loge tout ou partie dudit câble.

De manière plus précise, les conduits s'étendent selon une direction longitudinale, l'évidement s'étendant selon une direction parallèle à la direction longitudinale.

La paroi, prise en coupe, est délimitée par une première portion courbée et une deuxième portion courbée entre lesquelles s'étendent une première face sur laquelle est ménagé l'évidement et une deuxième face rectiligne selon une droite qui tangente la première portion courbée et la deuxième portion courbée d'un même côté des conduits. Une telle droite passe par un point de tangence de la première portion courbée et par un point de tangence de la deuxième portion courbée.

Un tel agencement présente l'avantage de positionner deux câbles permettant l'alimentation électrique du balai d'essuyage dans un seul évidement présent sur une face du tube. Cet agencement est particulièrement avantageux lorsque les deux câbles sont issus d'un connecteur hydraulique installé entre le dispositif de raccordement électrique et hydraulique relié au balai d'essuyage et le balai d'essuyage.

Alternativement, la paroi, prise en coupe, est délimitée par une première portion courbée et une deuxième portion courbée entre lesquelles s'étendent une première face sur laquelle est ménagé un premier évidement, et une deuxième face, opposée à la première face par rapport aux conduits, sur laquelle est ménagé un deuxième évidement.

Selon une variante de l'invention, le dispositif comprend un deuxième câble électriquement conducteur distinct du premier câble, le premier câble étant logé dans le premier évidement alors que le deuxième câble est logé dans le deuxième évidement. On entend par distinct le fait que le premier câble et le deuxième câble sont électriquement isolé l'un de l'autre dans le dispositif selon l'invention, quand bien même ils seraient reliés l'un à l'autre par un moyen d'espacement.

Avantageusement, le câble présente une section circulaire, une profondeur de l'évidement, mesurée selon une direction perpendiculaire à une première droite passant par le centre de chaque conduit, est au moins égale à un rayon du câble.

Selon une particularité de l'invention, la profondeur de l'évidement, mesurée comme précisé ci-dessus, est égale au diamètre du câble.

Dans une autre variante, le dispositif comprend un deuxième câble électriquement conducteur, les deux câbles étant logés dans un même évidement.

Avantageusement, la profondeur de l'évidement, mesurée comme précisé ci-dessus, est égale à au moins deux fois le diamètre du câble.

Selon une possibilité offerte par l'invention, le premier câble et le deuxième câble sont liés par un moyen d'espacement commun aux deux câbles.

L'évidement comprend un moyen de verrouillage du câble.

Avantageusement, ce moyen de verrouillage est formé par au moins une rainure qui vient en contact contre la gaine entre le premier câble et le deuxième câble.

Selon une variante de l'invention, l'élément chauffant est formé par au moins un brin résistif qui chemine entre les deux conduits. Un tel brin est par exemple un fil électrique résistif.

Avantageusement, un premier conduit et un deuxième conduit présentent chacun un centre de conduit par lesquels passe une première droite, l'élément chauffant comprend un premier brin résistif et un deuxième brin résistif présentant chacun un centre par lesquels passe une deuxième droite, la deuxième droite étant parallèle à la première droite.

Alternativement, la deuxième droite est perpendiculaire à la première droite.

L'invention couvre enfin un système d'approvisionnement et/ou de distribution en liquide lave-glace pour véhicule automobile comprenant au moins un dispositif de raccordement électrique et hydraulique tel que détaillé ci-dessus, éventuellement en combinaison avec un système d'essuyage des vitres dudit véhicule.

Un tout premier avantage selon l'invention réside dans la possibilité d'insérer aisément le dispositif de raccordement électrique et hydraulique dans l'entraîneur du bras d'essuyage. De même, l'encombrement du dispositif selon l'invention étant limité, il est plus facile à loger derrière la portion du bras d'essuyage située entre l'entraineur et le balai d'essuyage.

Un autre avantage réside dans le niveau esthétique atteint par l'invention. En effet, la combinaison du câble avec le tube de la manière proposée par l'invention évite que le câble se sépare du tube. On forme ainsi un ensemble unique et cohérent que l'utilisateur du véhicule ne voit pas comme un défaut esthétique.

D'autres caractéristiques, détails et avantages de l'invention ressortiront plus clairement à la lecture de la description donnée ci-après à titre indicatif en relation avec des dessins dans lesquels :
- la figure 1 est une vue générale d'un système d'approvisionnement et/ou de distribution en liquide et d'une installation d'essuyage, comprenant au moins un dispositif de raccordement électrique et hydraulique du liquide selon l'invention,
- la figure 2 est une vue en coupe du dispositif de raccordement électrique et hydraulique selon l'invention,
- la figure 3 est une vue en coupe d'une première variante du dispositif de raccordement électrique et hydraulique selon l'invention,
- la figure 4 est une vue en coupe d'une deuxième variante du dispositif de raccordement électrique et hydraulique selon l'invention,
- la figure 5 est une vue en coupe d'une troisième variante du dispositif de raccordement électrique et hydraulique selon l'invention,
- la figure 6 est une vue en coupe d'une quatrième variante du dispositif de raccordement électrique et hydraulique selon l'invention,
- la figure 7 est une vue en coupe d'une cinquième variante du dispositif de raccordement électrique et hydraulique selon l'invention.

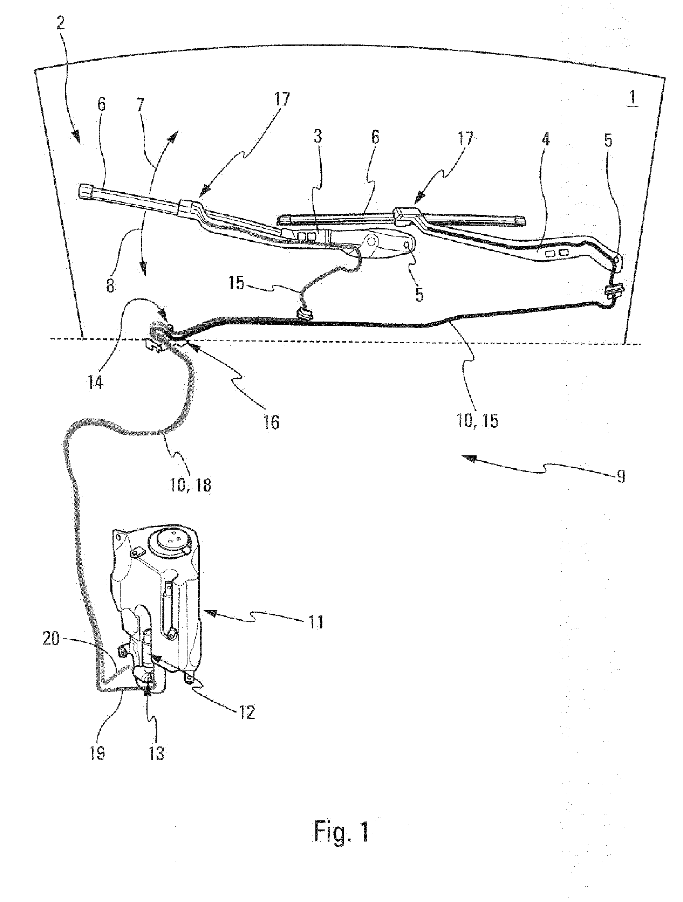

La figure 1 est une vue illustrant un pare-brise 1 de véhicule automobile destiné à être essuyé par une installation d'essuyage 2. Cette dernière comprend un premier bras 3 et un deuxième bras 4 chacun relié, par exemple, à un axe de rotation 5, par l'intermédiaire d'un entraineur. Ces deux bras se déplacent sur le pare-brise 1 selon un mouvement combiné de va-et-vient ou selon un mouvement antagoniste de va-et-vient.

A l'extrémité opposée à l'axe 5 par rapport au premier bras 3 et au deuxième bras 4, on trouve un balai d'essuyage 6 dont la fonction est de racler le pare-brise pour repousser l'eau présente sur ce dernier en des zones du pare-brise qui ne gênent pas la visibilité. Ces balais d'essuyage 6 sont reliés à chaque bras par un connecteur autorisant un remplacement du balai d'essuyage quand celui-ci est usé.

Les balais d'essuyage comprennent, par exemple, chacun deux rampes de projection d'un liquide, notamment un liquide lave-glace. Ces rampes s'étendent longitudinalement dans un même axe qu'un axe longitudinal du balai d'essuyage 6. Ces rampes sont disposées de part et d'autre du balai d'essuyage, selon son axe longitudinal, de manière à projeter le liquide lave-glace en avant du balai quand celui-ci se déplace selon un premier sens de déplacement illustré par la flèche 7 ou selon un deuxième sens de déplacement illustré par la flèche 8.

Cette figure 1 montre aussi la présence d'un système d'approvisionnement et/ou de distribution 9 en liquide lave-glace équipant le véhicule. Pour que les rampes projettent ce liquide, il est nécessaire de disposer d'un stock de liquide lave-glace, d'un moyen pour transporter ce liquide entre le stock et les rampes et d'un moyen de mettre en circulation ce liquide depuis ce stock vers les rampes.

Ce système d'approvisionnement et/ou de distribution 9 comprend, notamment :
- un réservoir 11 de rétention du liquide,
- un moyen de mise en circulation 12 du liquide dans le système d'approvisionnement et/ou de distribution 9, notamment une pompe,

- au moins un raccord hydraulique 13 destiné à relier la pompe à un dispositif de raccordement électrique et hydraulique référencé 10,
- un dispositif de raccordement 14 installé entre le dispositif de raccordement électrique et hydraulique 10 relié à la pompe et un autre dispositif de raccordement électrique et hydraulique 10 relié au balai d'essuyage 6,
- un support 16 apte à rassembler mécaniquement le dispositif de raccordement 14 et un ou plusieurs connecteurs électriques qui alimentent électriquement les éléments chauffants noyés à l'intérieur des dispositifs de raccordement électrique et hydraulique 10 mentionnés ci-dessus et au moins un élément de chauffage intégré au balai d'essuyage,
- un connecteur hydraulique 17 installé entre au moins le dispositif de raccordement électrique et hydraulique 10 relié au balai d'essuyage et le balai d'essuyage 6.

Le dispositif de raccordement électrique et hydraulique 10 situé entre le dispositif de raccordement 14 et le balai d'essuyage 6 sera appelé ci-après premier dispositif de raccordement électrique et hydraulique 15, ce dernier étant en grande partie situé à l'extérieur du véhicule et le long du bras d'essuyage. Ce premier dispositif de raccordement électrique et hydraulique 15 comprend au moins un câble d'alimentation électrique, notamment destiné à pourvoir en énergie électrique le ou les éléments chauffants intégrés au balai d'essuyage.

Le dispositif de raccordement électrique et hydraulique 10 situé entre le moyen de mise en circulation 12 et le dispositif de raccordement 14 sera quant à lui appelé deuxième dispositif de raccordement électrique et hydraulique 18, ce dernier s'étendant plus particulièrement dans un compartiment du véhicule, notamment le compartiment moteur. Il comportera également au moins un câble d'alimentation électrique.

Pour les caractéristiques s'appliquant à l'un ou à l'autre des dispositifs de raccordement électrique et hydraulique, la description emploiera le terme général dispositif de raccordement électrique et hydraulique référencé 10.

L'invention couvre le cas où la structure du premier dispositif de raccordement électrique et hydraulique 15 et celle du deuxième dispositif de raccordement électrique et hydraulique 18 du liquide sont identiques, mais elle couvre également le cas où le premier dispositif de raccordement électrique et hydraulique 15 est réalisé selon une variante de l'invention alors que le deuxième dispositif de raccordement électrique et hydraulique 18 est réalisé selon une autre variante de l'invention, différente de celle mise en oeuvre pour le premier dispositif de raccordement électrique et hydraulique 15.

Pour ces deux dispositifs de raccordement électrique et hydraulique, il s'agit notamment d'un tube, par exemple, flexible qui délimite au moins deux conduits de circulation du liquide. Le matériau constituant un tel tube peut être, par exemple, un EPDM, un élastomère ou un caoutchouc.

Dans l'exemple de la figure 1, le premier et le deuxième dispositif de raccordement électrique et hydraulique comprennent chacun deux conduits 19 et 20 à l'intérieur desquels le liquide est apte à circuler. Ce dispositif de raccordement électrique et hydraulique 10 comprend encore un élément chauffant (non visible sur la figure 1) qui chemine le long des conduits en étant noyé dans la matière constitutive du dispositif de raccordement électrique et hydraulique. Un tel élément chauffant est un élément résistif, qui prend la forme d'un premier brin électriquement conducteur et d'un deuxième brin électriquement conducteur qui, lorsqu'ils sont parcourus par un courant électrique, dégage des calories. On considère ainsi que ces brins sont résistifs.

On comprend donc que cet élément chauffant forme une source de chaleur à partir de laquelle le dispositif de raccordement électrique et hydraulique 10 puise l'énergie et la dissipe tout autour de l'espace, c'est-à-dire dans les conduits aptes à contenir le liquide.

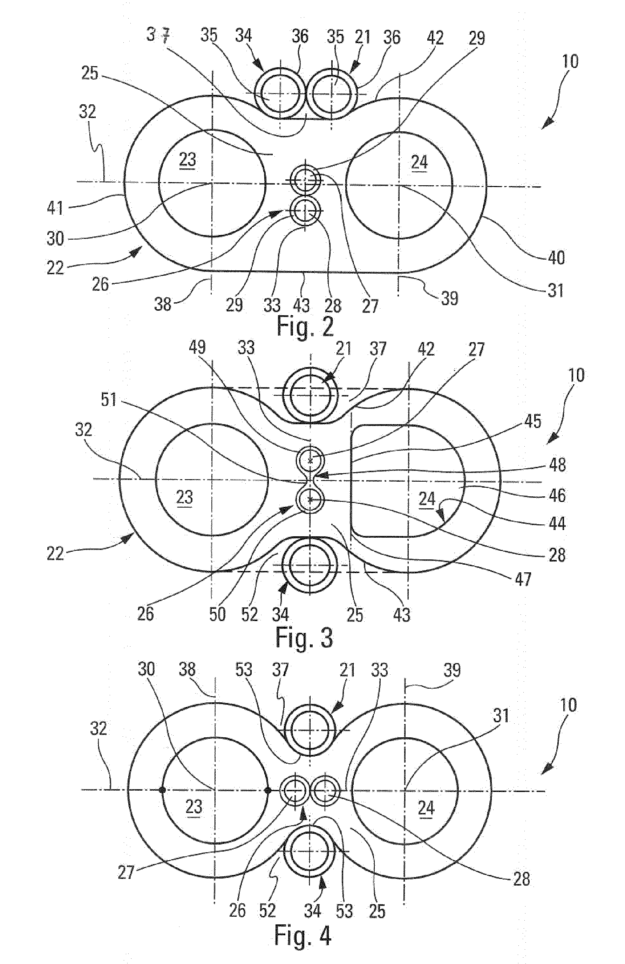

La figure 2 montre le détail du dispositif de raccordement électrique et hydraulique 10.

Un tel dispositif raccorde électriquement une source électrique à un consommateur, en l'occurrence le ou les éléments de chauffage présents sur le balai d'essuyage. Il forme donc un moyen de raccordement électrique en ce sens qu'il transporte, par l'intermédiaire d'un câble 21, un courant électrique.

Un tel dispositif raccorde également hydrauliquement un premier point du système d'approvisionnement et/ou de distribution à un deuxième point. Il forme ainsi un moyen de raccordement hydraulique en ce sens qu'il canalise, via le tube 22 et ses conduits, un liquide entre la pompe et le balai d'essuyage.

Ce dispositif de raccordement électrique et hydraulique 10 assure également un chauffage du liquide qui circule dans les conduits.

Ce dispositif de raccordement électrique et hydraulique 10 s'étend sur une longueur comprise entre 760 mm et 1940 mm. Le tube 22 comprend une paroi 25 qui délimite un premier conduit 23 d'un deuxième conduit 24. Cette paroi 25 délimite également ce premier conduit 23 et ce deuxième conduit 24 par rapport au milieu environnant le dispositif de raccordement électrique et hydraulique 10. Autrement dit, les conduits sont ménagés dans la paroi de manière étanche pour transporter le liquide lave-glace.

Selon l'exemple de la figure 2, on notera que la section du premier conduit 23 et du deuxième conduit 24 est circulaire, le diamètre interne de ces conduits étant, par exemple, compris entre 3 mm et 6 mm, une valeur de 3.5 mm ou de 3.9 mm étant particulièrement appropriée pour respecter les contraintes de débit de liquide et d'encombrement qu'un système d'essuyage automobile impose. Les valeurs dimensionnelles données ci-dessus sont bien entendues transposables à l'une quelconque des variantes décrites dans la présente description.

La paroi 25 loge également un élément chauffant 26 qui comprend un premier brin 27 électriquement conducteur et résistif qui jouxte un deuxième brin 28 électriquement conducteur, également résistif. Dans l'exemple de la figure 2, il s'agit d'un câble en cuivre ou en alliage d'aluminium dimensionné pour dégager des calories quand il est parcouru par un courant de tension comprise entre 9 et 16 volts et d'intensité comprise entre 1.5 et 10 ampères. Ce câble peut avantageusement être recouvert d'une gaine 29 dédié à chaque brin, la gaine du premier brin 27 étant distincte de la gaine du deuxième brin 28.

Les deux brins 27 et 28 de l'élément chauffant 26 sont en contact l'un avec l'autre à l'une ou l'autre des extrémités du dispositif de raccordement électrique et hydraulique 10, notamment en formant une boucle. En d'autres termes, le premier brin 27 et le deuxième brin 28 forment un seul et même fil électrique chauffant que l'on a doublé à l'intérieur du dispositif de raccordement électrique et hydraulique 10.

Cet élément chauffant 26 est noyé dans la paroi 25. On entend par noyé, par exemple, le fait que le matériau constitutif de la paroi 25 entoure en totalité l'élément chauffant 26, l'intégralité de la périphérie de ce dernier étant en contact avec la paroi.

La localisation de cet élément chauffant 26 par rapport au premier et au deuxième conduits 23, 24 est particulière. Cet élément chauffant 26 est disposé d'une manière générale entre le premier conduit 23 et le deuxième conduit 24, c'est-à-dire entre un premier axe 38 passant par un centre 30 du premier conduit 23 et par un deuxième axe 39 passant par un centre 31 du deuxième conduit 24.

Selon une variante de positionnement de l'élément chauffant 26, une première droite 32 passant par le centre 30 du premier conduit 23 et par le centre 31 du deuxième conduit 24 est perpendiculaire à une deuxième droite 33 passant par un centre du premier brin 27 et par un centre du deuxième brin 28. On garantit ainsi que l'encombrement, mesuré selon la première droite 32, est optimisé. Bien que la disposition perpendiculaire présente un avantage quant à l'équilibre de la répartition des calories entre le premier conduit et le deuxième conduit, l'invention couvre également le cas où la deuxième droite 33 forme un angle compris entre 0 et 90° par rapport à la première droite 32.

Selon la figure 2, le dispositif de raccordement électrique et hydraulique 10 comprend un premier câble 21 électriquement conducteur et un deuxième câble 34 électriquement conducteur. Chacun de ces câbles comprend une âme conductrice 35 et une gaine 36 qui isole électriquement l'âme de l'environnement extérieur. Ce premier câble 21 peut être disjoint du deuxième câble 34 mais ils peuvent également être joints l'un à l'autre, notamment quand une même gaine 36 entoure l'âme 35 du premier câble 21 et l'âme 35 du deuxième câble 34, tout en les maintenant éloignés l'une de l'autre.

Selon l'invention, la paroi 25 constitutive du tube 22 comprend un évidement 37 qui s'ouvre vers l'extérieur du tube 22. On entend par cela le fait que l'évidement 37 délimite un volume qui communique avec le milieu environnant le long du tube 22. Un tel évidement est une déformation du tube 22 en direction d'un axe central du tube, cet axe central étant situé sur la première droite 32 et entre le centre 30 du premier conduit 23 et le centre 31 du deuxième conduit 24.

Le premier câble 21 et/ou le deuxième câble 34 sont installés au moins en partie dans l'évidement 37 de manière à ce que la première droite 32 passant par le centre 30 du premier conduit 23 et par le centre 31 du deuxième conduit 24 soit parallèle à une droite passant par le centre du premier câble 21 et par le centre du deuxième câble 34. En d'autres termes, une hauteur totale du dispositif de raccordement électrique et hydraulique 10, mesurée selon une direction perpendiculaire à la première droite 32 et passant par l'évidement 37, est strictement inférieure à une dimension maximum d'un câble additionnée d'une hauteur du tube mesurée selon le premier axe 38 ou le deuxième axe 39 perpendiculaire à la première droite 32 et passant par le centre 30, 31 de l'un ou l'autre des conduits 23, 24.

Le premier conduit 23 et le deuxième conduit 24 s'étendent dans la longueur selon une direction longitudinale passant le centre 30 du premier conduit, par exemple. L'évidement 37 s'étend également selon cette même direction et il est par exemple localisé sur la face externe de la paroi 25 entre le premier axe 38 et le deuxième axe 39.

Un tel évidement est une cavité ménagée à la périphérie externe du tube 22. De manière plus précise, la paroi 25, prise en coupe, est délimitée par une première portion courbée 40 et une deuxième portion courbée 41 entre lesquelles s'étendent une première face 42 et une deuxième face 43.

La deuxième face 43 est rectiligne sur une droite qui tangente la première portion courbée 40 et la deuxième portion courbée 41 d'un même côté des conduits.

La première face 42 s'étend également entre un point de tangence de la première portion courbée 40 et un point de tangence de la deuxième portion courbée 41, de manière opposée à la deuxième face 43 par rapport au conduits 23 et 24, dans l'exemple de la figure 2, l'évidement 37 est ménagé sur la première face 42.

La figure 3 montre une première variante de réalisation de l'invention. On s'attachera ci-dessous à décrire les différences techniques avec le dispositif de raccordement électrique et hydraulique selon la figure 2, et on se reportera à cette dernière pour connaître la mise en oeuvre des éléments identiques.

La première différence réside dans la forme du ou des conduits. Une deuxième différence réside dans la présence et la forme d'un deuxième évidement distinct du premier évidement. Une troisième différence technique repose sur la présence d'un moyen d'espacement entre les brins de l'élément chauffant.

Le ou les conduits présentent une section particulière. Une face interne 44 de l'un et/ou l'autre des conduits 23, 24 comprend une première portion 45 de forme différente d'une deuxième portion 46 de ladite face interne. Il importe que la première portion 45 soit agencée pour maximiser un transfert de calories entre l'élément chauffant 26 et le liquide qui est apte à circuler dans le premier conduit 23 et/ou dans le deuxième conduit 24. Une telle maximisation est obtenue en réduisant l'épaisseur de la paroi 25 située entre l'élément chauffant et le conduit considéré.

Selon un exemple de réalisation, la section de ces conduits forme d'une manière générale un « D ». En d'autres termes, la première portion 45 est rectiligne alors que la deuxième portion 46 est courbe, notamment une suite de courbes de rayons différents. Dans un tel cas, la première portion 45 rectiligne s'étend selon une droite référencée 47 parallèle à la deuxième droite 33 qui passe par le centre du premier brin 27 et le centre du deuxième brin 28.

Bien entendu, la première portion 45 est adjacente à l'élément chauffant, celle-ci étant ainsi intercalée entre la deuxième portion 46 et l'élément chauffant 26 selon la première droite 32.

La figure 3 montre une telle structure sur seulement un des deux conduits mais l'invention couvre le cas où les deux conduits présentent une section en « D ». De même, la forme détaillée ici n'est pas limitée à la variante de la figure 3. Au contraire, elle est transposable dans l'une quelconque des variantes détaillées dans cette description.

Le dispositif de raccordement électrique et hydraulique 10 comprend encore un moyen d'espacement 48 destiné à créer et maintenir un espace entre le premier brin 27 et le deuxième brin 28. Celui-ci est commun au premier brin 27 et au deuxième brin 28 en ce sens qu'il est disposé entre ces deux brins et en contact avec ceux-ci. Une telle définition s'entend aussi d'un moyen d'espacement qui entoure toute la périphérie de chaque brin, formant ainsi un fourreau tout autour des brins. Dans un tel cas, les parties distales 49 et 50 du moyen d'espacement 48 qui entourent les brins 27 et 28 et la partie centrale 51 du moyen d'espacement 48 forment une seule et unique pièce.

Ce moyen d'espacement 48 s'étend entre les brins. Il est ainsi installé entre le centre du premier brin 27 et le centre du deuxième brin 28, et est aligné sur la deuxième droite 33. Ce moyen d'espacement 48 génère un écartement, autrement appelé distance, entre le premier brin 27 et le deuxième brin 28, ce qui permet à chacun des brins de dissiper des calories sur un secteur angulaire important. On évite également tout point chaud puisque le moyen d'espacement 48 impose une distance déterminée de manière à minimiser l'élévation de température dans l'axe de la deuxième droite 33 tout en maximisant la dissipation des calories au profit du premier conduit 23 et/ou du deuxième conduit 24.

Selon un exemple de réalisation, le moyen d'espacement 48 est réalisé en un matériau souple, par exemple un polymère résistant à la température, et plus particulièrement un polytétrafluoroéthylène qui convient bien à cette application en raison de sa faible adhérence utile pendant le procédé d'extrusion du dispositif de raccordement électrique et hydraulique 10.

Bien que représenté seulement sur la figure 3, un moyen d'espacement tel que décrit ci-dessus est applicable à l'une ou l'autre des variantes de l'invention.

Comparé à la variante de la figure 2, ce dispositif de raccordement électrique et hydraulique 10 comprend un deuxième évidement 52 qui est ménagé sur la deuxième face 43, opposée à la première face 42 par rapport aux conduits. On peut également considérer que ce deuxième évidement 52 est en vis-à-vis du premier évidement 37 par rapport à l'élément chauffant 26.

Dans un tel cas, le premier évidement 37 reçoit un seul et unique câble 21 et le deuxième câble 34 est alors logé dans le deuxième évidement 52. On constate dans cette variante que le premier câble 21 et le deuxième câble 34 présentent une section circulaire. Une profondeur des deux évidements, mesurée selon une direction perpendiculaire à la première droite 32 qui coupe le point le plus profond de l'évidement, est au moins égale à un rayon du câble reçu dans l'évidement, et, selon cette variante, inférieure à un diamètre de ce câble.

Le premier évidement 37 et le deuxième évidement 52 forment des cavités qui entrent plus profondément dans la paroi 25 que celle illustréeà la figure 2.

La figure 4 montre une troisième variante de réalisation de l'invention. On s'attachera ci-dessous à décrire les différences techniques avec le dispositif de raccordement électrique et hydraulique selon les figures précédentes, et on se reportera à ces dernières pour connaître la mise en oeuvre des éléments identiques.

Une première différence réside dans l'orientation de l'élément chauffant 26 par rapport aux premier et deuxième conduits 23 et 24. Une deuxième différence réside dans la profondeur et la forme du premier évidement 37 et du deuxième évidement 52.

Comme pour les variantes précédentes, le premier conduit 23 et le deuxième conduit 24 présentent chacun un centre de conduit, respectivement référencé 30 et 31, par lesquels passe la première droite 32. En revanche, l'élément chauffant 26 est disposé de manière que la deuxième droite 33 qui passe par le centre du premier brin 27 et par le centre du deuxième brin 28 soit parallèle à la première droite 32.

Dans l'exemple de la figure 4, la deuxième droite 33 est confondue avec la première droite 32 mais l'invention couvre également le cas où l'élément chauffant est décalé latéralement, si bien qu'une distance non-nul sépare la première droite 32 de la deuxième droite 33.

Le premier évidement 37 et le deuxième évidement 52 présente un contour courbe 53 qui suit la périphérie de chaque câble logé dans l'évidement sur un secteur angulaire compris entre 45° et 180°. Une telle caractéristique forme alors un moyen de maintien du câble vis-à-vis de la paroi 25 pour éviter un déplacement de ce câble, selon la première droite 32, dans l'évidement concerné.

On notera également que la profondeur du premier évidement 37 et/ou du deuxième évidement 52, mesurée selon une direction orthogonale à la première droite 32, est égale au diamètre du premier câble 21, respectivement du deuxième câble 34. Une telle structure présente l'avantage de loger en totalité les câbles électriquement conducteurs qui alimentent les éléments de chauffage montés sur les balais d'essuyage. Autrement dit, la dimension du dispositif de raccordement électrique et hydraulique 10 mesuré perpendiculairement à la première droite 32 au droit des câbles est inférieure ou égale à la dimension de la paroi 25 mesurée selon le premier axe 38 ou le deuxième axe 39.

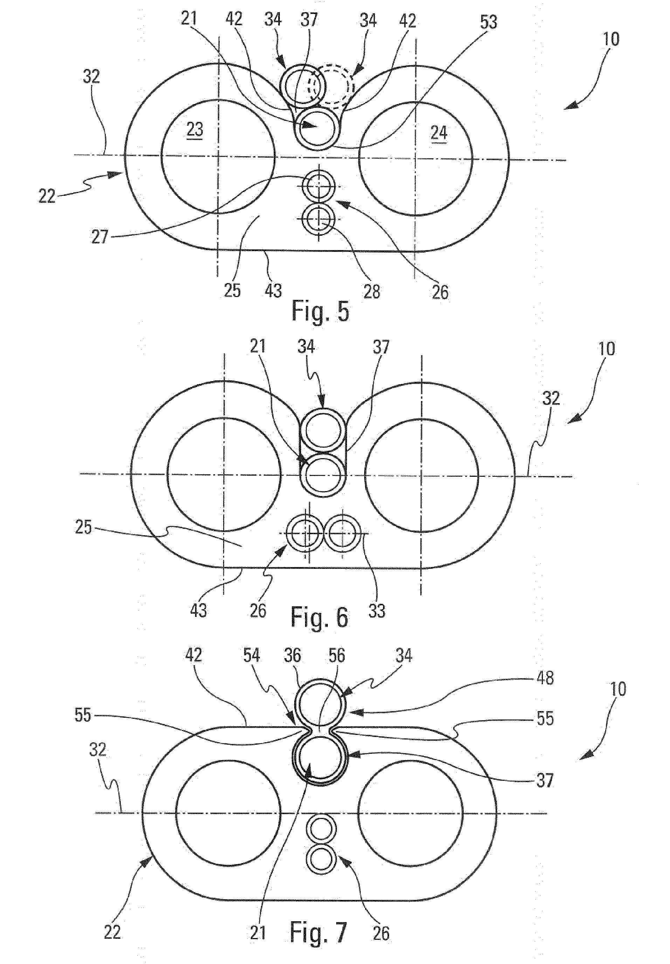

La figure 5 montre une troisième variante du dispositif de raccordement électrique et hydraulique selon l'invention. On s'attachera ci-dessous à décrire les différences techniques avec le dispositif de raccordement électrique et hydraulique selon les figures précédentes, et on se reportera à ces dernières pour connaître la mise en oeuvre des éléments identiques.

Une première différence réside dans la localisation de l'élément chauffant 26 dans la paroi 25 ainsi que la profondeur et la forme du premier évidement 37.

Dans cette variante, la paroi comprend un unique évidement, le premier câble 21 et le deuxième câble 34 étant tous deux reçus dans le premier évidement. La profondeur du premier évidement mesuré tel qu'indiqué ci-dessus est ici au moins égale à deux fois le diamètre d'un des câbles. Le contour courbe 53 est formé sur un secteur angulaire au moins égal à 180° de manière à maintenir et bloquer le premier câble 21. En restant dans l'encombrement du tube 22, le deuxième câble 34 peut prendre une première position représentée en trait plein, où il est en contact contre la face externe 42 de l'évidement du côté du premier conduit 23. En pointillé, on a symbolisé la position du deuxième câble 34 en appui contre la face externe 42 du côté du deuxième conduit 24.

L'élément chauffant 26 est installé de manière perpendiculaire à la première droite 32 mais décalé dans la paroi 25 vers la deuxième face 43. De manière plus précise, le premier brin 27 et le deuxième brin 28 s'étendent tous deux entre la deuxième face 43 et la première droite 32.

La figure 6 montre une quatrième variante du dispositif de raccordement électrique et hydraulique 10. On s'attachera ci-dessous à décrire les différences techniques avec le dispositif de raccordement électrique et hydraulique selon les figures précédentes, et on se reportera à ces dernières pour connaître la mise en oeuvre des éléments identiques.

L'élément chauffant 26 est installé de sorte que la deuxième droite 33 qui passe par le centre des premier et deuxième brins 27, 28 soit parallèle à la première droite 32. De manière plus précise, l'élément chauffant 26 est décalé vers la deuxième face 43. En d'autres termes, l'élément chauffant 26 est noyé dans la matière constitutive de la paroi 25 et s'étend entre la deuxième face 43 et la première droite 32.

Le premier évidement 37 forme ici une saignée qui reçoit à la fois le premier câble 21 et le deuxième câble 34. Cette saignée forme un moyen de maintien de ces deux câbles. On notera enfin que le centre du premier brin 21 est sur la première droite 32. Ainsi, la droite qui passe par le centre du premier câble 21 et par le centre du deuxième câble 34 est perpendiculaire à la première droite 32.

La figure 7 illustre plus particulièrement la présence d'un moyen de verrouillage 54 du câble ménagé dans l'évidement 37. Pour les autres caractéristiques visibles sur ces figures, on se reportera aux figures précédentes et à la description qui s'y rapporte.

Le moyen de verrouillage 54 est formé par une rainure 55 qui coopère avec une zone amincie 56 de la gaine 36 commune au premier câble 21 et au deuxième câble 34. La largeur de cette zone amincie 56, mesurée selon une direction parallèle à la première droite 32, est inférieure au diamètre du premier câble 21 ou du deuxième câble 34. Cette zone amincie 56 se trouve alors coincée par la rainure 55, si bien que la position des câbles est alors verrouillée par rapport au tube 22.

Sur cette figure, le moyen de verrouillage 54 comprend deux rainures 55 situées l'une en face de l'autre qui se terminent dans le plan de la première face 42. Ce moyen de verrouillage borde également l'évidement 37, délimitant ainsi l'ouverture de cet évidement vers le milieu environnant le dispositif de raccordement électrique et hydraulique 10 selon l'invention.

Ces rainures 55 sont flexibles, c'est-à-dire déformables, afin d'autoriser l'insertion du premier câble 21 dans l'évidement 37.

Le moyen de verrouillage 54 a été illustré dans le plan de la première face 42 mais l'invention couvre également le cas non représenté où ce moyen de verrouillage est ménagé sur la paroi interne délimitant l'évidement. Autrement dit, le moyen de verrouillage est réalisé en profondeur dans l'évidement, ce qui permet de loger en totalité le premier câble et de loger au moins en partie, et avantageusement en totalité, le deuxième câble, tout en maintenant ces deux câbles dans le tube.

## Revendications

1. Dispositif de raccordement électrique et hydraulique (10, 15, 18) pour système d'approvisionnement et/ou de distribution (9) en liquide à projeter sur une vitre d'un véhicule, comprenant au moins un tube (22) et au moins un premier câble (21, 34) électriquement conducteur, le tube (22) est délimité par une paroi (25) dans laquelle est formés au moins deux conduits (23, 24) de circulation du liquide et dans laquelle est noyé un élément chauffant (26), ladite paroi comprenant au moins un évidement (37, 52) ouvert vers l'extérieur du tube (22) et dans lequel se loge tout ou partie dudit câble (21, 34).

2. Dispositif selon la revendication 1, dans lequel les conduits (23, 24) s'étendent selon une direction longitudinale, l'évidement (37, 52) s'étendant selon une direction parallèle à la direction longitudinale.

3. Dispositif selon l'une des revendications 1 ou 2, dans lequel la paroi (25), prise en coupe, est délimitée par une première portion courbée (40) et une deuxième portion courbée (41) entre lesquelles s'étendent une première face (42), sur laquelle est ménagé l'évidement (37), et une deuxième face (43) rectiligne selon une droite qui tangente la première portion courbée (40) et la deuxième portion courbée (41) d'un même côté des conduits (23, 24).

4. Dispositif selon l'une quelconque des revendications 1 ou 2, dans lequel la paroi (25), prise en coupe, est délimitée par une première portion courbée (40) et une deuxième portion courbée (41) entre lesquelles s'étendent une première face (42), sur laquelle est ménagé un premier évidement (37), et une deuxième face (43), opposée à la première face (42) par rapport aux conduits (23, 24), sur laquelle est ménagé un deuxième évidement (52).

5. Dispositif selon la revendication 4, comprenant un deuxième câble (34) électriquement conducteur distinct du premier câble (21), le premier câble (21) étant logé dans le premier évidement (37) alors que le deuxième câble (34) est logé dans le deuxième évidement (52).

6. Dispositif selon l'une quelconque des revendications 1 à 5, dans lequel le câble (21, 34) présente une section circulaire, et dans lequel une profondeur de l'évidement (37, 52) mesurée selon une direction perpendiculaire à une première droite (32) passant par le centre (30, 31) de chaque conduit (23, 24), est au moins égale à un rayon du câble (21, 34).

7. Dispositif selon la revendication 6, dans lequel la profondeur de l'évidement (37, 52) est égale au diamètre du câble (21, 34).

8. Dispositif selon l'une quelconque des revendications 1 à 3, comprenant un deuxième câble (34) électriquement conducteur, le premier câble (21) et le deuxième câble (34) étant logés dans un même évidement (37).

9. Dispositif selon la revendication 8, dans lequel la profondeur de l'évidement, mesurée selon une direction perpendiculaire à une première droite (32) passant par le centre (30, 31) de chaque conduit (23, 24), est égale à au moins deux fois le diamètre d'un câble (21, 34).

10. Dispositif selon l'une quelconque des revendications 8 à 9, dans lequel le premier câble (21) et le deuxième câble (34) sont liés par un moyen d'espacement (48) commun aux deux câbles (21, 34).

11. Dispositif selon l'une quelconque des revendications précédentes, dans lequel l'évidement (37, 52) comprend un moyen de verrouillage (54) d'au moins un câble.

12. Dispositif selon l'une quelconque des revendications précédentes, dans lequel l'élément chauffant (26) est formé par au moins un brin résistif (27, 28) qui chemine entre les deux conduits (23, 24).

13. Dispositif selon la revendication 12, dans lequel les conduits (23, 24) présentent chacun un centre de conduit (30, 31) par lesquels passe une première droite (32), l'élément chauffant (26) comprend un premier brin résistif (27) et un deuxième brin résistif (28) présentant chacun un centre par lesquels passe une deuxième droite (33), la deuxième droite (33) étant parallèle à la première droite (32).

14. Dispositif selon la revendication 12, dans lequel les conduits (23, 24) présentent chacun un centre de conduit (30, 31) par lesquels passe une première droite (32), l'élément chauffant (26) comprend un premier brin résistif (27) et un deuxième brin résistif (28) présentant chacun un centre par lesquels passe une deuxième droite (33), la deuxième droite (33) étant perpendiculaire à la première droite (32).

15. Système d'approvisionnement et/ou de distribution (9) en liquide lave-glace pour véhicule automobile comprenant au moins un dispositif de raccordement électrique et hydraulique (10, 15, 18) selon l'une quelconque des revendications 1 à 14.
